(19) Europäisches Patentamt
European Patent Office
Office européen des brevets

(11) Veröffentlichungsnummer: **0 485 930 A1**

(12) # EUROPÄISCHE PATENTANMELDUNG

(21) Anmeldenummer: **91119187.2**

(51) Int. Cl.[5]: **C08L 83/16**, G02B 1/04

(22) Anmeldetag: **11.11.91**

(30) Priorität: **16.11.90 DE 4036644**

(43) Veröffentlichungstag der Anmeldung:
**20.05.92 Patentblatt 92/21**

(84) Benannte Vertragsstaaten:
**AT BE CH DE FR GB IT LI NL SE**

(71) Anmelder: **HOECHST AKTIENGESELLSCHAFT**
**Postfach 80 03 20**
**W-6230 Frankfurt am Main 80(DE)**

(72) Erfinder: **Stehlin, Thomas, Dr.**
**Ubierstrasse 11**
**W-6238 Hofheim am Taunus(DE)**
Erfinder: **Theis, Jürgen, Dr.**
**Weisskirchner 47**
**W-6370 Oberursel(DE)**
Erfinder: **Vaahs, Tilo, Dr.**
**Am Flachsland 54**
**W-6233 Kelkheim (Taunus)(DE)**
Erfinder: **Brück, Martin**
**Haneckstrasse 17**
**W-6238 Hofheim am Taunus(DE)**
Erfinder: **Brockmeyer, Andreas, Dr.**
**Wachenheimer Strasse 58**
**W-6237 Liederbach(DE)**

(54) **Temperaturbeständige optische Formkörper und Verfahren zu ihrer Herstellung.**

(57) Verfahren zur Herstellung von optischen Formkörpern aus Polysilazanen oder Polyhydridochlorsilazanen, wobei die Polysilazane oder die Polyhydridochlorsilazane zu Formkörpern verpreßt oder in einem Lösungsmittel gelöst und extrudiert werden und anschließend einer Gasatmosphäre mit einer Temperatur im Bereich von 10 bis 200 ° C und einer relativen Feuchtigkeit im Bereich von 20 bis 100 % 0,1 bis 24 Stunden ausgesetzt werden.

Die Formkörper weisen eine Kern/Mantel-Struktur auf, wobei der Mantel aus 1 bis 3 Gew.-% O, 20 bis 25 Gew.-% N und 30 bis 40 Gew.-% Si und der Kern zu 100 Gew.-% aus einem Polysilazan oder Polyhydridochlorsilazan besteht.

EP 0 485 930 A1

Optische Fasern haben eine weitverbreitete Anwendung in der Automobil- und Beleuchtungstechnik, sowie in der medizinischen Diagnostik und insbesondere in der Datenübertragung erfahren.

Zumeist wurden diese Fasern aus Glas hergestellt, jedoch beschränkte sich der Einsatzbereich wegen ihrer geringen Flexibilität, insbesondere bei größeren Durchmessern und wegen ihrer niedrigen Bruchfestigkeit bei mechanischer Beanspruchung auf eine relativ geringe Zahl bestimmter Anwendungen.

Es fehlte daher nicht an Versuchen, das Glas durch organische polymere Materialien zu ersetzen. Polymerfasern besitzen ein geringes spezifisches Gewicht, weisen aber dennoch eine hohe Festigkeit auf. Ihre Flexibiliät bleibt auch bei größeren Faserdurchmessern noch erhalten und sie sind ferner praktisch unempfindlich gegenüber mechanischer Beanspruchung. Ein weiterer Vorteil der Polymerfasern liegt in den kostengünstigen und leicht herstellbaren Ausgangskomponenten. Optische Fasern aus organischen Polymeren zeigen jedoch bei Temperaturerhöhung eine starke Abnahme der Transmission, so daß sich ihre Anwendung auf Einsatzgebiete beschränkt, in denen sie keinen großen Temperaturbelastungen ausgesetzt sind. So liegt beispielsweise die maximale Einsatztemperatur von Polymethylmethacrylat bei 80 ° C.

Im allgemeinen besteht eine polymere optische Faser aus einem Kern mit höherem Brechungsindex und einem Mantel mit kleinerem Brechungsindex. Diese Anordnung gewährleistet, daß das Licht durch Reflektion an der Grenzschicht zwischen Kern und Mantel nicht nach außen tritt und somit innerhalb der Faser verbleibt. Es muß also bei lichtoptischen Fasern eine die Faser vollständig umgebende Schicht aufgebracht werden. Das Aufbringen derartiger Schichten, beispielsweise durch Eintauchen der Faser in eine Lösung, die ein Polymer in gelöster Form enthält oder durch spezielle Spinnverfahren, ist aufwendig und kompliziert.

Es bestand daher die Aufgabe, optische Formkörper, insbesondere mit Kern/Mantelstruktur herzustellen, die sich durch ein einfaches und wirtschaftliches Verfahren erhalten lassen, eine große Flexibilität, eine hohe Bruchfestigkeit und eine gute Transmission aufweisen und insbesondere auch bei höheren Temperaturen einsatzfähig sind.

Die vorliegende Erfindung löst diese Aufgabe. Es wurde gefunden, daß sich aus polymeren Silazanen oder Hydridochlorsilazanen Fasern mit einer Kern/Mantelstruktur herstellen lassen, die die obengenannten Vorteile besitzen.

Derartige Polysilazane und Polyhydridochlorsilazane, welche sich zur Herstellung der erfindungsgemäßen Formkörper eignen, fanden bisher nur als präkeramische Materialien Verwendung, welche zu Siliziumnitrid pyrolisiert werden und werden beispielsweise in der DE-A-37 37 921 (US-A-4 935 481), der DE-A-37 43 825 (US-A-4 939 225), der US-A-4 946 920 und der US-A-4 931 513 beschrieben.

Gegenstand der vorliegenden Erfindung ist daher ein Verfahren zur Herstellung von optischen Formkörpern aus Polysilazanen oder Polyhydridochlorsilazanen, welche zunächst zu Formkörpern verpreßt oder in einem Lösungsmittel gelöst und extrudiert werden und anschließend einer Gasatmosphäre mit einer Temperatur im Bereich von +10 bis +200 ° C und einer relativen Feuchtigkeit im Bereich von 20 bis 100 % 0,1 bis 24 Stunden ausgesetzt werden.

Zur Herstellung dieser Polysilazane können beispielsweise Aminochlorsilane (I) der Formel $RSiCl_2$-NR-R mit 3,15 Mol Ammoniak pro Mol Silan in THF umgesetzt werden. Hierbei bilden sich Oligomere der Formel (II)

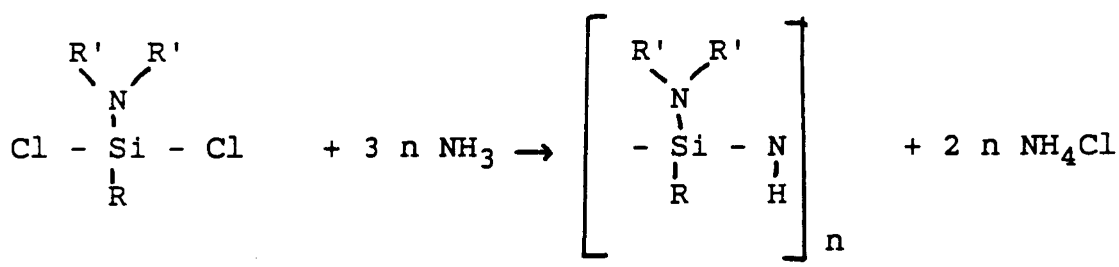

(I) (II)

n = ganze Zahl.

Durch Verdrängung der Dialkylaminogruppe erfolgt eine weitere Vernetzung der Oligomeren untereinander, wodurch Polysilazane mit Struktureinheiten der Formel (III) entstehen.

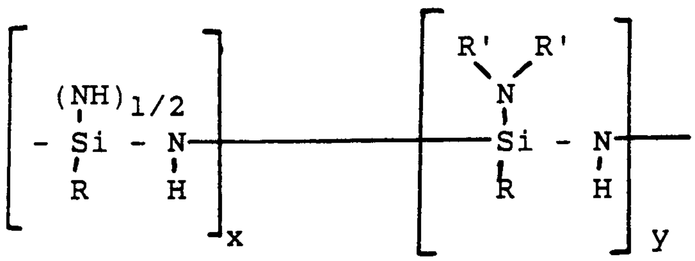

(III)

R und R' können in diesem Fall gleiche oder verschiedene Reste darstellen. Mögliche Reste R und R' sind beispielsweise

R = $(C_1-C_4)$Alkyl, Vinyl oder Phenyl und

R' = $(C_1-C_4)$Alkyl.

In der oben angegebenen Formel bedeuten x und y die Molfraktionen der beiden Struktureinheiten, wobei x + y = 1 sind und x einen Wert im Bereich von 0,75 bis 0,95 annehmen kann. Beispiele für weitere für die Herstellung der erfindungsgemäßen Formkörper verwendbaren Polysilazane werden in den vorstehend genannten Druckschriften beschrieben.

Zur Herstellung der erfindungsgemäßen Formkörper werden die Polysilazane entweder direkt in die gewünschte Form gepreßt oder zunächst in einem Lösemittel, z. B. THF, Hexan oder Toluol gelöst und anschließend in einer Kolbenspinnanlage oder Extrusionsspinnanlage bei einer Luftfeuchtigkeit von weniger als 1 % (beispielsweise in getrocknetem Stickstoff) zu Fasern versponnen.

Die Herstellung der erfindungsgemäßen Formkörper mit Kern/Mantelstruktur aus den Polysilazanformkörpern erfolgt in einem darauffolgenden Schritt durch Einbringen der Polysilazanformkörper in eine Gasatmosphäre mit einem definierten Wassergehalt. Durch Diffusion des Wassers durch die Oberfläche der Fasern kommt es zu einem Aufbrechen der Si-NH-Si-Bindungen. Durch Substitution von NH durch O entstehen unter Bildung und Austritt von Ammoniak Siloxane, die ebenfalls untereinander vernetzt sind. Der Wassergehalt der Atmosphäre besitzt eine relative Feuchte im Bereich von 20 bis 100 %, vorzugsweise 30 bis 90 %. Die Temperaturen liegen zwischen 10 bis 200 °C, vorzugsweise im Bereich von 20 bis 50 °C. Die Gasatmosphäre ist im allgemeinen gereinigte Luft, in einem bevorzugten Fall kann aber auch Stickstoff oder ein Edelgas, insbesondere Helium, besonders bevorzugt Gemische dieser Gase verwendet werden. Das Verhältnis von Siloxan zu Silazan in der sich bildenden Mantelschicht läßt sich über den Feuchtigkeitsgehalt der Atmosphäre in Abhängigkeit von der Temperatur steuern.

Die minimale Verweilzeit der Formkörper ist abhängig von dem jeweiligen Verhältnis Temperatur/relative Feuchte (RF). Bei niedrigeren Temperaturen ist eine höhere relative Feuchte bevorzugt. Die minimalen Verweilzeiten werden durch Messen der optischen Transmission der Formkörper bestimmt.

Der Zeitpunkt, bei dem sich die Transmission des Körpers nicht mehr meßbar verändert, wird als minimale Verweilzeit bezeichnet. Die Verweilzeiten sind ferner abhängig von der Form des Körpers sowie von den als Ausgangskomponenten eingesetzten Polysilazanen. Sie betragen im Mittel bei 50 °C ca. 5 Stunden, bei 80 °C ca. 2 Stunden und bei 110 °C ca. 0,2 Stunden. Durch weitere Temperaturerhöhung ist es möglich, die minimalen Verweilzeiten noch weiter zu reduzieren. Bei dem erfindungsgemäßen Verfahren ergaben sich bei Temperaturen im Bereich von 10 bis 200 °C und relative Feuchtigkeiten im Bereich von 20 bis 100 % Verweilzeiten von 0,1 bis 24 Stunden.

Die nach diesem Verfahren hergestellten optischen Formkörper besitzen einen Mantel aus

1 bis 3 Gew.-% O,

20 bis 25 Gew.-% N und

30 bis 40 Gew.-% Si.

Der Kern besteht zu 100 % aus einem Polysilazan oder Polyhydridochlorsilazan. Die Dicke des Mantels liegt im Bereich von 0,1 bis 5 $\mu$, vorzugsweise im Bereich von 0,2 bis 2,0 $\mu$. Die Dämpfungen der erfindungsgemäßen Formkörper ergeben sich zu 0,1 bis 10 dB/cm.

Die nach dem erfindungsgemäßen Verfahren hergestellten siliziumhaltigen Kern/Mantelformkörper zeichnen sich durch ihre hohe Flexibilität, mechanische Belastbarkeit und einer guten Temperaturbeständigkeit bis zu 200 °C und einer Beständigkeit auch gegenüber extremen Witterungsbedingungen aus. Sie sind wegen ihrer großen Temperaturbeständigkeit insbesondere für Beleuchtungs- und Datenübertragungszwecke (optische Fasern) und optische Sensoren, insbesondere an Orten mit hoher Wärmebelastung, wie z. B. im Automobil, geeignet.

Beispiel 1:

Mittels einer Kolbenspinnanlage wurde zunächst unter einer trockenen Stickstoffatmosphäre eine polymere Silazanfaser hergestellt. Die Faser wurde dann 48 Std. bei 25 °C und einem Feuchtigkeitsgehalt von 80 % gelagert, wodurch sich ein optischer Mantel bildete. Der Durchmesser der Faser betrug 1 mm.

Die Transmission der Faser wurde mit Hilfe einer Lichtquelle (HeNe-Laser) und einem längs der Faser beweglichen Detektor sowie einem Detektor am Ende der Faser gemessen. Beide Detektoren sind mit Ulbrichtkugeln ausgestattet, um Anisotropieeffekte zu vermeiden. Mit diesem Aufbau war es möglich, die Dämpfung der Faser sowie deren Gleichmäßigkeit (Streuzentren) zu untersuchen (Bild 1). Als Ergebnis ergab sich ein Wert von ca. 0,2 dB/cm bei 633 nm.

Beispiel 2:

Mit Hilfe des Meßplatzes wurde die Abhängigkeit der Dämpfung von der Verweilzeit in der Gasatmosphäre bestimmt. Die notwendige minimale Verweilzeit wurde als der Zeitpunkt bestimmt, bei der die Transmission sich nicht mehr meßbar verändert. Als Ergebnis ergab sich für eine $N_2$-Atmosphäre (95 % RF) für 50 °C 5 Std., 80 °C 2 Std., 110 °C 0,2 Std. für eine 1 mm-Faser.

Beispiel 3:

Die in Beispiel 1 hergestellte Faser wurde 2 Tage lang bei 150 °C unter gereinigter Luft und 80 % relativer Feuchte gelagert. Eine erneute Messung der Dämpfung ergab keine signifikante Änderung der Transmission.

Beispiel 4:

Die entsprechend Beispiel 1 hergestellten Fasern wurden unter Stickstoff und Luft bei 100 °C und 200 °C ein "Curing" durchgeführt. Für die Transmission ergab sich eine Änderung von weniger als 1 %

Beispiel 5:

Eine gemäß Beispiel 1 hergestellte Faser von 0,5 mm Durchmesser wurde als opt. Sensor verwendet. Dazu wurde die Faser in die Nähe einer Lichtquelle (Halogenlampe) geführt. Die Intensität des eingekoppelten Lichts, die proportional zu der gesamten abgestrahlten Lichtleistung der Lampe war, konnte somit zur Stabilisierung der Lichtleistung mittels eines Regelkreises herangezogen werden. Die Temperatur in Fasernähe lag bei über 130 °C. Mit diesem Aufbau war es möglich, bei einem Experiment zur Messung von Vibrationen auf optischem Wege, die eingestrahlte Lichtintensität über mehrere Tage konstant zu halten.

**Patentansprüche**

1. Verfahren zur Herstellung von optischen Formkörpern aus Polysilazanen oder Polyhydridochlorsilazanen, dadurch gekennzeichnet, daß die Polysilazane oder die Polyhydridochlorsilazane zu Formkörpern verpreßt oder in einem Lösungsmittel gelöst und extrudiert werden und anschließend einer Gasatmosphäre mit einer Temperatur im Bereich von 10 bis 200 °C und einer relativen Feuchtigkeit im Bereich von 20 bis 100 % 0,1 bis 24 Stunden ausgesetzt werden.

2. Verfahren nach Anspruch 1, dadurch gekennzeichnet, daß die Gasatmosphäre aus gereinigter Luft, Stickstoff oder einem Edelgas, vorzugsweise Helium oder aus Gemischen dieser Gase besteht.

3. Formkörper hergestellt nach einem Verfahren nach Anspruch 1, dadurch gekennzeichnet, daß der Formkörper eine Kern/Mantel-Struktur aufweist.

4. Optischer Formkörper mit Kern/Mantel-Struktur, dadurch gekennzeichnet, daß der Mantel aus
   1 bis 3 Gew.-% O,
   20 bis 25 Gew.-% N und
   30 bis 40 Gew.-% Si

und der Kern zu 100 Gew.-% aus einem Polysilazan oder Polyhydridochlorsilazan besteht, die Dicke des optischen Mantels im Bereich von 0,1 bis 5 μ liegt und der Formkörper eine Temperaturbeständigkeit bis 200 ° C aufweist.

**5.** Optischer Formkörper nach Anspruch 3, dadurch gekennzeichnet, daß die Dämpfung im Bereich von 0,1 bis 10 dB/cm liegt.

**6.** Verwendung eines optischen Formkörpers nach Anspruch 4 als optische Faser.

**7.** Verwendung eines optischen Formkörpers nach Anspruch 4 als optischer Sensor.

European Patent Office

# EUROPEAN SEARCH REPORT

Application Number

EP 91 11 9187

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A,P | EP-A-0 454 108 (HOECHST AKTIENGESELLSCHAFT)<br>* claims 1,10 * | 1 | C08L83/16<br>G02B1/04 |
| A | EP-A-0 335 128 (WESTINGHOUSE ELECTRIC CORPORATION)<br>* claims 1,2,3 * | 1 | |
| A | EP-A-0 206 449 (DOW CORNING CORP.)<br>* claim 1 * | 1 | |
| A | EP-A-0 361 181 (SHIN-ETSU CHEMICAL CO. LTD.)<br>* claim 1 * | 1 | |

TECHNICAL FIELDS SEARCHED (Int. Cl.5 )

C08L
G02B
C08G

The present search report has been drawn up for all claims

| Place of search | Date of completion of the search | Examiner |
|---|---|---|
| THE HAGUE | 10 MARCH 1992 | DEPIJPER R.D.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document